# EUROPÄISCHE PATENTANMELDUNG

(11) **EP 4 516 653 A1**
(43) Veröffentlichungstag der Anmeldung: **05.03.2025**
(21) Anmeldenummer: 23193615.4
(22) Anmeldetag: 26.08.2023
(51) Int. Cl.: B62K 21/26

(54) **FAHRRADGRIFF**

(71) Anmelder: SQlab GmbH, 82024 Taufkirchen (DE)
(72) Erfinder: Hild, Tobias, 82024 Taufkirchen (DE); Schlecht, Michael, 85521 Ottobrunn (DE); Holz, Maximilian, 81541 München (DE)
(74) Vertreter: Koelle, Alexander

(57) **Zusammenfassung**

Die vorliegende Erfindung betrifft einen Fahrradgriff (1), welcher an einer Lenkstange (A) eines Fahrrads befestigbar ist, umfassend: eine Innenhülse (2), welche an der Lenkstange (A) befestigbar ist, wobei die Innenhülse (2) ein der Lenkstange (A) zugewandtes erstes Ende (2-1) und ein der Lenkstange (A) abgewandtes zweites Ende (2-2) aufweist; ein Befestigungselement (3), welches ausgebildet ist, das erste Ende (2-1) der Innenhülse (2) an der Lenkstange (A) zu fixieren; und einen Außenüberzug (4), welcher an einer Außenseite (2-5) der Innenhülse (2) angeordnet ist, und aus einem verformbaren Kunststoff (12) gebildet ist.

Die Innenhülse (2) weist eine Mehrzahl von wellenförmigen Durchbrüchen (6) auf, welche sich jeweils von dem ersten Ende (2-1) der Innenhülse (2) zu dem zweiten Ende (2-2) der Innenhülse (2) erstrecken, wobei die wellenförmigen Durchbrüche (6) an der Außenseite (2-5) der Innenhülse (2) nebeneinander und diese wellenförmigen Durchbrüche (6) somit entlang einer Umfangsrichtung (7) der Innenhülse (2) zumindest abschnittsweise umlaufend angeordnet sind.

## Beschreibung

### Technisches Gebiet

Die vorliegende Erfindung betrifft einen Fahrradgriff mit einer Innenhülse, welche eine Mehrzahl von wellenförmigen Durchbrüchen aufweist.

### Stand der Technik

Es ist bekannt, dass an Lenkstangen von herkömmlichen Fahrrädern Fahrradgriffe befestigt sind, um dem Fahrradfahrer ein wirksames und sicheres Greifen einer entsprechenden Lenkstange zu ermöglichen.

Ein herkömmlicher Fahrradgriff weist hierbei eine aus einem nicht verformbaren Material, jedenfalls aber aus einem harten Material, gebildete zylinderförmige Innenhülse auf, welche mittels eines Befestigungselements, insbesondere eines Klemmelements, an der zylinderförmigen Lenkstange befestigt wird. Vorzugsweise weist diese zylinderförmige Innenhülse über wenigstens einen Längsabschnitt einen Schlitz im Befestigungs- bzw. Klemmbereich auf, um die Klemmung mittels des Klemmelements zu gewährleisten. Dieser Schlitz verläuft im Wesentlichen parallel zur Längsachse des Fahrradgriffs und der Innenhülse.

An einer Außenseite der Innenhülse ist ferner ein Außenüberzug aus einem verformbaren Kunststoff angeordnet. Der verformbare Außenüberzug passt sich hierbei der Kontur der Hand des Fahrradfahrers an, so dass ein wirksames und sicheres Greifen des Fahrradgriffs sichergestellt wird. Durch die verformbaren Eigenschaften kann der Außenüberzug ferner stoßdämpfende Eigenschaften aufweisen, um Fahrbahnunebenheiten auszugleichen.

Hierbei tritt oftmals das Problem auf, dass die aus einem nicht verformbaren Material, jedenfalls aber aus einem harten Material, gebildete zylinderförmige Innenhülse eines herkömmlichen Fahrradgriffs keinerlei signifikante Verlagerung, insbesondere Verdrehung, der Innenhülse zulässt. Eine entsprechende signifikante Verlagerung, insbesondere Verdrehung, der Innenhülse kann insbesondere dann vorteilhaft sein, wenn der Fahrradfahrer eine anspruchsvolle Fahrstrecke, wie beispielsweise eine steile Bergauffahrt oder eine Geländefahrt, zu bewältigen hat, wie nachfolgend erläutert wird.

Bei entsprechenden anspruchsvollen Fahrstrecken sitzt ein Fahrradfahrer oftmals nicht mit dem Gesäß auf dem Fahrradsattel, sondern tritt im Stehen in die Fahrradpedale, so dass sich der Fahrradfahrer hierbei rhythmisch bewegt. Eine Stabilisierung der stehenden Position des Fahrradfahrers wird hierbei durch das Greifen der Fahrradgriffe mit der linken und rechten Hand des Fahrradfahrers erreicht. Die entsprechende rhythmische Bewegung des Fahrradfahrers wird über dessen Arme an die die Fahrradgriffe haltenden Hände übertragen, so dass sich Kraftspitzen ergeben, welche auf die Fahrradgriffe wirken.

Der verformbare Außenüberzug von herkömmlichen Fahrradgriffen lässt zwar geringfügige Verformungen zu, kann jedoch entsprechende Kraftspitzen und Drehmomentspitzen nicht ausreichend aufnehmen, so dass sich ergonomische Nachteile für den Fahrradfahrer beim Greifen der Fahrradgriffe ergeben, und insbesondere auch nachteilige Belastungen der Hand auftreten.

Aus diesem Grund kann für den Fahrradfahrer der Komfort beim Greifen eines herkömmlichen Fahrradgriffs, insbesondere beim Bewältigen einer anspruchsvollen Fahrstrecke, wie beispielsweise einer steilen Bergauffahrt oder einer Geländefahrt, oftmals reduziert sein.

Die WO 1999/039970 und die EP 1 051 324 B1 offenbaren einen Klemmgriff mit Innenhülse, insbesondere für Lenkstangen von Fahrrädern. Ferner offenbart diese Druckschrift einen Schlitz in der Innenhülse zum Klemmen der Innenhülse und somit des Fahrradgriffs auf dem Lenker, der im Wesentlichen parallel zur Längsachse des Fahrradgriffs verläuft.

Die EP 2 909 078 B1 offenbart einen gefederten Fahrradgriff mit einem Federelement, welches mit einem Halteelement und einem Greifelement des Fahrradgriffs drehfest verbunden ist, so dass eine Drehbewegung des Greifelements um die Rohrmittelachse des Lenkerrohrs ausführbar ist.

### Offenlegung der Erfindung

Die vorliegende Erfindung stellt sich zur Aufgabe, einen Fahrradgriff zu schaffen, welcher ein komfortables Aufliegen der Hand eines Fahrradfahrers auf dem Fahrradgriff sicherstellt und ein sicheres Greifen des Fahrradgriffs gewährleistet, insbesondere beim Bewältigen einer anspruchsvollen Fahrstrecke, wie beispielsweise einer steilen Bergauf- und/oder Bergabfahrt oder einer Geländefahrt.

Die Aufgabe der Erfindung wird durch einen Fahrradgriff nach Anspruch 1 gelöst. Die abhängigen Ansprüche beanspruchen bevorzugte Ausführungsformen der Erfindung.

Gemäß einem Aspekt der vorliegenden Erfindung umfasst der erfindungsgemäße Fahrradgriff einen Fahrradgriff, welcher an einer Lenkstange eines Fahrrads befestigbar ist, umfassend eine Innenhülse, welche an der Lenkstange befestigbar ist, wobei die Innenhülse ein der Lenkstange zugewandtes erstes Ende und ein der Lenkstange abgewandtes zweites Ende aufweist; ein Befestigungselement, welches ausgebildet ist, das erste Ende der Innenhülse an der Lenkstange zu fixieren; und einen Außenüberzug, welcher an einer Außenseite der Innenhülse angeordnet ist, und aus einem verformbaren Kunststoff gebildet ist, dadurch gekennzeichnet, dass die Innenhülse eine Mehrzahl von wellenförmigen Durchbrüchen aufweist, welche sich jeweils von dem ersten Ende der Innenhülse zu dem zweiten Ende der Innenhülse erstrecken, wobei die wellenförmigen Durchbrüche an der Außenseite der Innenhülse nebeneinander und somit die Innenhülse entlang einer Umfangsrichtung der Innenhülse zumindest abschnittsweise umlaufend angeordnet sind.

Der erfindungsgemäße Fahrradgriff hat den Vorteil, dass durch die wellenförmigen Durchbrüche der Innenhülse eine lokale Schwächung der Innenhülse dahingehend erreicht wird, dass die Innenhülse zumindest abschnittsweise verdrehbar wird. Somit können entsprechende beim Bewältigen einer anspruchsvollen Fahrstrecke, wie beispielsweise einer steilen Bergauffahrt oder einer Geländefahrt, auftretende durch die Hand des Fahrradfahrers auf den Fahrradgriff wirkende Kraftspitzen, Drehmomente, Drehmomentspitzen und/oder Vibrationen durch ein Verdrehen der Innenhülse aufgenommen werden, wodurch sich der Griffkomfort für den Fahrradfahrer verbessert.

Dadurch, dass die wellenförmigen Durchbrüche an der Außenseite der Innenhülse nebeneinander und somit entlang einer Umfangsrichtung der Innenhülse umlaufend angeordnet sind, wird erreicht, dass eine gleichmäßige, insbesondere symmetrische Verformung des entsprechenden Bereichs der Innenhülse stattfindet, und nach dem Ende der auf die Innenhülse wirkenden Kraftspitzen, Drehmomente, Drehmomentspitzen und/oder Vibrationen aufgrund der dem Material der Innenhülse innewohnenden Rückstellkraft eine wirksame Rückverformung der Innenhülse in den Ausgangszustand erreicht wird.

Trotz der durch die wellenförmigen Durchbrüche bewirkten lokalen Verformbarkeit der Innenhülse wird die strukturelle Gesamtstabilität der Innenhülse nicht signifikant beeinträchtigt, so dass dennoch eine wirksame und stabile Befestigung der Innenhülse an der Lenkstange des Fahrrads weiterhin sichergestellt wird.

Insbesondere umfasst das nicht verformbare, schwer verformbare bzw. harte Material der Innenhülse ein Metall, wie z.B. eine Titanlegierung, oder ein Leichtmetall, wie z.B. eine Aluminiumlegierung, oder einen Kunststoff, wie z.B. einen faserverstärkten Kunststoff.

Insbesondere weist die Innenhülse an dem ersten Ende einen Befestigungsbereich auf, wobei das Befestigungselement ausgebildet ist, den Befestigungsbereich an der Lenkstange des Fahrrads zu fixieren, um die Innenhülse an der Lenkstange zu befestigen. Hierbei weist die Innenhülse vorzugsweise im Befestigungsbereich einen Schlitz auf.

Hierbei liegt das Befestigungselement insbesondere zumindest abschnittsweise an dem Befestigungsbereich an, um die Innenhülse zu befestigen. Insbesondere ist das Befestigungselement als ein Klemmelement geformt, welches ausgebildet ist, die Innenhülse auf die Lenkstange zu klemmen, wobei das Klemmelement insbesondere eine Schraubeinrichtung und/oder eine Spanneinrichtung umfasst.

Insbesondere umfasst das verformbare Material des Außenüberzugs ein elastisches Material, insbesondere Gummi und/oder einen Elastomer-Kunststoff.

Insbesondere ist der Außenüberzug drehfest mit der Innenhülse verbunden, insbesondere auf die Innenhülse aufgegossen, aufgespritzt oder aufgeklebt.

Insbesondere ist die Innenhülse als eine zylinderförmige Innenhülse ausgebildet.

In einer Ausführungsform sind die wellenförmigen Durchbrüche der Innenhülse zumindest abschnittsweise, insbesondere vollständig, mit einem verformbaren Kunststoff gefüllt.

Dadurch wird der technische Vorteil erreicht, dass der in den wellenförmigen Durchbrüchen aufgenommene verformbare Kunststoff ein vorteilhaftes Rückstellverhalten der Innenhülse sicherstellt. Wird die Innenhülse verdreht, wird der in den wellenförmigen Durchbrüchen aufgenommene verformbare Kunststoff komprimiert. Lässt die auf die Innenhülse wirkende Kraft nach, expandiert der komprimierte Kunststoff wieder und führt zu einer Verdrehung der Innenhülse zurück in die Ausgangsposition.

In einer Ausführungsform ist der verformbare Kunststoff des Außenüberzugs in den Durchbrüchen der Innenhülse zumindest abschnittsweise, insbesondere vollständig, aufgenommen.

Dadurch wird der technische Vorteil erreicht, dass eine Vereinfachung des Einbringens des verformbaren Kunststoffs in die wellenförmigen Durchbrechungen dadurch erreicht wird, dass sich der verformbare Kunststoff des Außenüberzugs in die wellenförmigen Durchbrechungen hinein erstreckt, beispielsweise indem der verformbare Kunststoff des Außenüberzugs bei der Herstellung des Fahrradgriffs direkt auf die Innenhülse aufgebracht, insbesondere aufgespritzt wird.

In einer Ausführungsform ist das zweite Ende der Innenhülse gegenüber dem ersten Ende der Innenhülse entlang einer Verlagerungsrichtung verdrehbar, wobei der in den Durchbrüchen der Innenhülse aufgenommene verformbare Kunststoff ausgebildet ist, bei einem Verdrehen der Innenhülse eine der Verlagerungsrichtung entgegengesetzt wirkende Rückstellkraft bereitzustellen, um nach dem Verdrehungsvorgang eine Rückführung der Innenhülse in den Ausgangszustand zu erreichen.

Dadurch wird der technische Vorteil erreicht, dass eine wirksame Aufnahme von Kraftspitzen, Drehmomenten, Drehmomentspitzen und/oder Vibrationen durch die Verdrehung der Innenhülse ermöglicht wird, und dass nach dem Ende der wirkenden Kraftspitzen, Drehmomente, Drehmomentspitzen und/oder Vibrationen eine Verdrehung der Innenhülse zurück in die Ausgangsposition ermöglicht und erreicht wird.

In einer Ausführungsform sind die wellenförmigen Durchbrüche von dem ersten Ende und/oder dem zweiten Ende beabstandet in der Innenhülse geformt.

Dadurch wird der technische Vorteil erreicht, dass durch die von den Enden der Innenhülse beabstandet angeordneten wellenförmigen Durchbrüche eine wirksame Verdrehung eines Teils der Innenhülse erreicht wird.

In einer Ausführungsform sind die wellenförmigen Durchbrüche zwischen einem ersten Endabschnitt der Innenhülse, welcher sich von dem ersten Ende aus in Richtung des zweiten Endes, und einem zweiten Endabschnitt der Innenhülse, welcher sich von dem zweiten Ende aus in Richtung des ersten Endes erstreckt, angeordnet.

Dadurch wird der technische Vorteil erreicht, dass der erste Endabschnitt der Innenhülse durch das Befestigungselement an der Lenkstange festgelegt und nicht verdrehbar ist, und dass der durch die wellenförmigen Durchbrüche von dem ersten Endabschnitt getrennte zweite Endabschnitt der Innenhülse gegenüber dem ersten Endabschnitt vorteilhaft verdrehbar ist.

In einer Ausführungsform ist das zweite Ende der Innenhülse, insbesondere der zweite Endabschnitt der Innenhülse, gegenüber dem ersten Ende der Innenhülse, insbesondere dem ersten Endabschnitt der Innenhülse, verdrehbar.

Dadurch wird der technische Vorteil erreicht, dass die Verdrehbarkeit des zweiten Endes, insbesondere des zweiten Endabschnitts der Innenhülse, eine wirksame Aufnahme von auf den Fahrradgriff wirkenden Kraftspitzen, Drehmomente, insbes. von Drehmomentspitzen, und Vibrationen ermöglicht.

In einer Ausführungsform ist zwischen zwei benachbarten die Innenhülse entlang der Umfangsrichtung umlaufenden wellenförmigen Durchbrüchen jeweils ein wellenförmiger Steg angeordnet.

Dadurch wird der technische Vorteil erreicht, dass die zwischen den jeweiligen benachbarten wellenförmigen Durchbrüchen angeordneten jeweils wellenförmigen Stege die strukturelle Stabilität der Innenhülse sicherstellen, insbesondere bei einem Verdrehen der Innenhülse.

In einer Ausführungsform weist der jeweilige wellenförmige Steg die gleiche Form und/oder Länge wie die beiden benachbarten wellenförmigen Durchbrüche auf.

Dadurch wird der technische Vorteil erreicht, dass eine homogene Struktur des zwischen dem ersten Ende und dem zweiten Ende der Innenhülse angeordneten verformbaren Bereichs der Innenhülse bereitgestellt wird.

In einer Ausführungsform weisen die Mehrzahl von wellenförmigen Durchbrüchen und insbesondere die Mehrzahl von wellenförmigen Stegen eine Sinuswellenform auf.

Dadurch wird der technische Vorteil erreicht, dass die entsprechende Sinuswellenform der wellenförmigen Durchbrüche, bzw. der wellenförmigen Stege, wirksame Verformungseigenschaften der Innenhülse sicherstellen.

In einer Ausführungsform ist die Sinuswellenform durch die Formel f(x) = a · sin (l · x) charakterisiert, wobei der Parameter a der Amplitude der Sinuswellenform entspricht, und wobei der Parameter l der Länge einer Periode der Sinuswellenform entspricht.

Dadurch wird der technische Vorteil erreicht, dass durch die Variation der Amplitude a und der Periodenlänge l der Sinuswellenform die Verformungseigenschaften der Innenhülse wirksam eingestellt werden können.

In einer Ausführungsform ist die Innenhülse als eine zylinderförmige Innenhülse geformt.

Dadurch wird der technische Vorteil erreicht, dass die zylinderförmige Innenhülse einfach auf die Lenkstange des Fahrrads aufgesteckt werden kann.

In einer Ausführungsform weist die Innenhülse einen Innendurchmesser auf, welcher von dem ersten Ende der Innenhülse zu dem zweiten Ende der Innenhülse abnimmt.

Dadurch wird der technische Vorteil erreicht, dass der Innendurchmesser am zweiten Ende der Innenhülse geringer ist als der Innendurchmesser am ersten Ende der Innenhülse, wodurch die Innenhülse am zweiten Ende die in der Innenhülse aufgenommene Lenkstange mit einer größeren Reibungskraft beaufschlagt, als am ersten Ende der Innenhülse. Das bedeutet und hat zur Folge, dass durch die Fertigungstoleranzen von Lenker und Griffhülse kein Spiel entsteht und dadurch unangenehme, unerwünschte Geräusche beim Verdrehen der Griffhülse im Fahrbetrieb vermieden werden, so z.B. Quietschen, Knirschen und/oder Knarzen.

Dies bewirkt, dass bei einem Verdrehen der Innenhülse entlang der Umfangsrichtung am zweiten Ende der Innenhülse eine vorteilhafte Rückstellkraft bereitgestellt wird, welche nach dem Ende der die Verdrehung der Innenhülse bewirkenden Kraft eine wirksame Rückverformung der Innenhülse in den Ausgangszustand sicherstellt.

In einer Ausführungsform weist die Innenhülse einen Innenhülsenhohlraum zur Aufnahme der Lenkstange auf, wobei die Innenhülse eine Innenhülseninnenwandung aufweist, welche den Innenhülsenhohlraum begrenzt, wobei an der Innenhülseninnenwandung im Bereich des zweiten Endes der Innenhülse zumindest eine Rippe angeordnet ist, wobei sich insbesondere die an der Innenhülseninnenwandung angeordnete zumindest eine Rippe von dem ersten Ende der Innenhülse zu dem zweiten Ende der Innenhülse erstreckt.

Dadurch wird der technische Vorteil erreicht, dass die an der Innenhülseninnenwandung angeordnete zumindest eine Rippe eine lokale Anlagefläche an der innerhalb der Innenhülse aufgenommenen Lenkstange sicherstellt und dadurch die Reibung bzw. die Reibkraft, die der Rückstellkraft entgegenwirkt, insbesondere gegenüber der vorgehenden Ausführungsform, reduziert wird. Auch dies bewirkt, dass bei einem Verdrehen der Innenhülse entlang der Umfangsrichtung am zweiten Ende der Innenhülse eine vorteilhafte Rückstellkraft bereitgestellt wird, welche nach dem Ende der die Verdrehung der Innenhülse bewirkenden Kraft eine wirksame Rückverformung der Innenhülse in den Ausgangszustand sicherstellt.

Insbesondere weist die zumindest eine Rippe eine Rippenhöhe auf, welche sich von der Innenhülseninnenwandung radial zu einer Mittelachse der Innenhülse erstreckt, wobei die Mittelachse in der Mitte des Innenhülsenhohlraums angeordnet ist und sich von dem ersten Ende der Innenhülse zu dem zweiten Ende der Innenhülse erstreckt.

Insbesondere nimmt die Rippenhöhe der zumindest einen Rippe entlang der Erstreckungsrichtung der zumindest einen Rippe von dem ersten Ende zu dem zweiten Ende der Innenhülse zu, so dass die Anpresskraft der zumindest einen Rippe in einem Bereich, welcher dem zweiten Ende der Innenhülse zugewandt ist, größer ist als in einem Bereich der Rippe, welcher dem ersten Ende der Innenhülse zugewandt ist.

Insbesondere ist der Innenhülsenhohlraum an dem zweiten Ende der Innenhülse abgeschlossen.

In einer Ausführungsform ist an der Innenhülseninnenwandung eine Mehrzahl von Rippen, insbesondere drei Rippen, symmetrisch zu einer Mittelachse der Innenhülse angeordnet.

Insbesondere ist auch hier die Mittelachse in einer Mitte eines durch einen Innenhülseninnenwandung begrenzten Innenhülsenhohlraums der Innenhülse angeordnet ist und erstreckt sich die Mittelachse von dem ersten Ende der Innenhülse zu dem zweiten Ende der Innenhülse.

Dadurch wird der technische Vorteil erreicht, dass durch die symmetrische Anordnung der Rippen in Bezug auf die Mittelachse eine gleichmäßige Anpresskraft zwischen den Rippen und der in dem Innenhülsenhohlraum aufgenommenen Lenkstange erreicht wird sowie die Reibungskraft am zweiten Ende der Innenhülse an den Rippen gegenüber der Ausführungsform eines durchgehend gleichen Innendurchmessers am zweiten Ende der Innenhülse reduziert ist, so dass eine gleichmäßige Rückstellkraft beim Verdrehen der Innenhülse bereitgestellt wird. Insbesondere ist jede Rippe die drei Rippen in einem Winkel von 120° gegenüber der benachbarten Rippe angeordnet.

In einer Ausführungsform ist der Außenüberzug drehfest mit der Innenhülse verbunden, insbesondere auf die Innenhülse aufgegossen, aufgespritzt, oder aufgeklebt.

Dadurch wird der technische Vorteil erreicht, dass durch die drehfeste Verbindung zwischen dem Außenüberzug und der Innenhülse auf den Außenüberzug übertragene Kraftspitzen direkt auf die Innenhülse übertragen werden, und zu einer Verdrehung der Innenhülse führen, wodurch die Kraftspitzen aufgenommen werden.

In einer Ausführungsform ist das Befestigungselement ein Klemmelement, welches ausgebildet ist, die Innenhülse auf die Lenkstange zu klemmen, und wobei das Befestigungselement insbesondere eine Schraub- oder Spanneinrichtung umfasst.

Dadurch wird der technische Vorteil erreicht, dass durch das Klemmelement eine stabile Befestigung der Innenhülse auf der Lenkstange des Fahrrads erreicht wird.

In einer Ausführungsform ist die Innenhülse aus einem nicht verformbaren, insbesondere harten, Material geformt, welches insbesondere Metall oder Kunststoff, insbesondere faserverstärkten Kunststoff, oder insbesondere Leichtmetall, insbesondere eine Aluminium- oder Titanlegierung, umfasst.

Dadurch wird der technische Vorteil erreicht, dass das nicht verformbare, insbesondere harte, Material der Innenhülse eine wirksame strukturelle Stabilität der Innenhülse sicherstellt.

In einer Ausführungsform umfasst das verformbare Material des Außenüberzugs und/oder das in den Durchbrüchen der Innenhülse aufgenommene verformbare Material elastisches Material, insbesondere Gummi und/oder einen Elastomer-Kunststoff.

Dadurch wird der technische Vorteil erreicht, dass das entsprechende elastische Material eine wirksame Verformbarkeit und auch ein vorteilhaftes Rückstellverhalten des Außenüberzugs sicherstellt.

In einer Ausführungsform weist der Außenüberzug an einem dem zweiten Ende der Innenhülse zugewandten Bereich eine Abflachung auf.

Dadurch wird der technische Vorteil erreicht, dass die Abflachung eine Vergrößerung der Handauflagefläche bewirkt, so dass ein stabileres Greifen des Fahrradgriffs erreicht wird.

In einer Ausführungsform ist der Fahrradgriff als ein Spritzgussteil oder als ein 3D-Druckteil geformt.

Dadurch wird der technische Vorteil erreicht, dass ein als ein Spritzgussteil oder als ein 3D-Druckteil geformter Fahrradgriff einfach und vorteilhaft hergestellt werden kann.

### Kurze Beschreibung der Figuren

Die Erfindung wird nun unter Bezugnahme auf die beigefügten Figuren erläutert, die exemplarische und nicht beschränkende Ausführungsformen der Erfindung zeigen, wobei
Figur 1 einen an einer Lenkstange eines Fahrrads befestigten Fahrradgriff mit Innenhülse gemäß einer Ausführungsform zeigt,
Figur 2 den in Figur 1 dargestellten Fahrradgriff ohne Außenüberzug und ohne Befestigungselement zeigt, also nur die Innenhülse zeigt.
Figur 3 eine vergrößerte Darstellung der wellenförmigen Durchbrüche in der in Figur 1 und Figur 2 dargestellten Innenhülse des Fahrradgriffs zeigt,
Figur 4 eine schematische Darstellung einer Sinuswellenfunktion der wellenförmigen Durchbrüche des in Figur 3 dargestellten Fahrradgriff zeigt, und
Figur 5 den an einer Lenkstange eines Fahrrads befestigten Fahrradgriff mit Innenhülse gemäß der in Figur 1 gezeigten Ausführungsform zeigt.

### Detaillierte Beschreibung der Figuren

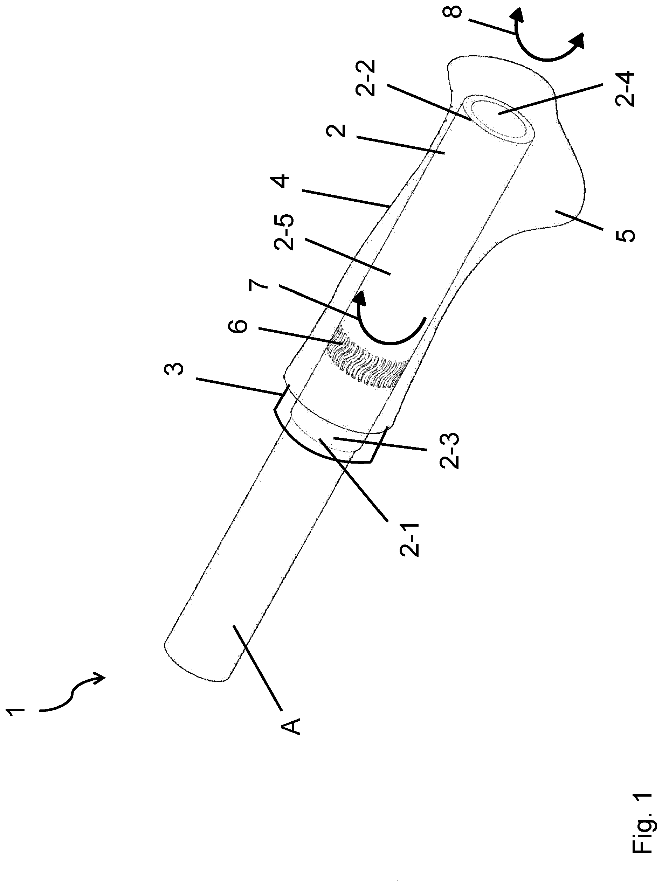

Figur 1 zeigt einen an einer Lenkstange eines Fahrrads befestigten Fahrradgriff gemäß einer Ausführungsform.

Herkömmliche Fahrräder weisen Lenkstangen auf, welche üblicherweise am Vorbau des jeweiligen Fahrrads befestigt sind. Herkömmliche Lenkstangen können gerade ausgebildet sein oder gebogene oder geschwungene Formen aufweisen.

Herkömmliche Lenkstangen sind meist aus Metall, Leichtmetall oder faserverstärktem Kunststoff geformt. Herkömmliche Lenkstangen sind meist zylinderförmig mit einem runden Querschnitt geformt.

Da das Material herkömmlicher Lenkstangen meist eine hohe Härte aufweist, werden in herkömmlichen Fahrrädern üblicherweise Fahrradgriffe verwendet, welche an der jeweiligen Lenkstange befestigt werden. Entsprechende Fahrradgriffe ermöglichen dem Fahrradfahrer ein vorteilhaftes Greifen der Lenkstange.

Herkömmliche Fahrradgriffe weisen üblicherweise eine Innenhülse auf, welche an der Lenkstange befestigt ist, um eine stabile Verbindung zwischen der Lenkstange und dem Fahrradgriff zu gewährleisten. Um dies zu gewährleisten wird die entsprechende Innenhülse eines herkömmlichen Fahrradgriffs üblicherweise mittels eines Befestigungselements an der Lenkstange befestigt.

Auf der Innenhülse eines herkömmlichen Fahrradgriffs wird üblicherweise ein Außenüberzug aus einem verformbaren Material angeordnet, so dass für den Fahrradfahrer ein angenehmes Greifen des Fahrradgriffs ermöglicht wird. Zudem stellt das verformbare Material des herkömmlichen Fahrradgriffs eine stoßdämpfende Funktion bereit.

In Figur 1 ist ein Fahrradgriff 1 gezeigt, welcher an einer Lenkstange A eines Fahrrads befestigt ist. Der Fahrradgriff 1 weist hierbei eine Innenhülse 2 auf, welche an der Lenkstange A des Fahrrads befestigt ist.

Die Innenhülse 2 weist ein der Lenkstange A zugewandtes erstes Ende 2-1 und ein der Lenkstange A abgewandtes zweites Ende 2-2 auf. Ein in Figur 1 lediglich schematisch dargestelltes Befestigungselement 3 ist ausgebildet, das erste Ende 2-1 der Innenhülse 2 an der Lenkstange A zu fixieren.

Auch wenn dies in Figur 1 nicht dargestellt ist, ist das Befestigungselement 3 insbesondere ein Klemmelement, welches ausgebildet ist, die Innenhülse 2 auf die Lenkstange A zu klemmen. Insbesondere umfasst das Befestigungselement 3 eine Schraub- oder Spanneinrichtung.

Das erste Ende 2-1 der Innenhülse 2 weist hierbei insbesondere einen Befestigungsbereich 2-3, insbesondere Klemmbereich, auf, durch welchen die Innenhülse 2 an der Lenkstange A befestigt werden kann. Auch wenn das in der Figur 1 nicht dargestellt ist, kann der Befestigungsbereich 2-3 einen Befestigungsspalt aufweisen, welcher eine vorteilhafte Positionierung der Innenhülse 2 an der Lenkstange A ermöglicht. Zur Montage des Befestigungsbereichs 2-3, insbesondere des Klemmbereichs, wird beispielsweise durch das Befestigungselement, insbesondere ein Klemmelement, insbesondere eine Schraubvorrichtung oder eine Spannvorrichtung, der Durchmesser des Befestigungsbereichs 2-3, insbesondere aufgrund des dort angeordneten Schlitzes in der Innenhülse 2, reduziert, um die Innenhülse 2 wirksam an der Lenkstange A zu befestigen, insbesondere an die Lenkstange A zu klemmen.

Um eine wirksame Befestigung, insbesondere Klemmung, der Innenhülse 2 des Fahrradgriffs 1 an der Lenkstange A sicherzustellen, ist sowohl die Lenkstange A als auch die Innenhülse 2 aus einem nicht verformbaren Material ausgebildet. Das nicht verformbare Material der Innenhülse 2 umfasst hierbei insbesondere ein Metall, wie z.B. eine Titanlegierung, oder ein Leichtmetall, wie eine Aluminiumlegierung oder Kunststoff, insbesondere einen faserverstärkten Kunststoff.

Die Innenhülse 2 ist hierbei an der Lenkstange A des Fahrrads befestigt, wobei die Innenhülse 2 auf die Lenkstange A geschoben ist und umlaufend, insbesondere vollständig umlaufend, an der Lenkstange A anliegt. Hierbei liegt eine Innenseite der Innenhülse 2 an der Lenkstange A an. Die Lenkstange A ist als eine zylinderförmige Lenkstange A ausgebildet. Aus der Figur 1 ist ersichtlich, dass in dem zweiten Ende 2-2 der Innenhülse 2 eine Innenhülsenöffnung 2-4 gebildet ist.

Auch wenn die Innenhülse 2 eine stabile Befestigung des Fahrradgriffs 1 an der Lenkstange A des Fahrrads ermöglicht, ist es aus ergonomischen Gründen unvorteilhaft, wenn der Fahrradfahrer die Innenhülse 2 direkt greift. Aus diesem Grund weist der in Figur 1 dargestellte Fahrradgriff 1 einen Außenüberzug 4 auf, welcher an einer Außenseite 2-5 der Innenhülse 2 angeordnet ist. Der lediglich aus darstellungstechnischen Gründen transparent gezeigte Außenüberzug 4 ist aus einem verformbaren Kunststoff gebildet.

Das verformbare Material des Außenüberzugs 4 umfasst insbesondere elastisches Material, insbesondere Gummi und/oder einen Elastomer-Kunststoff.

Der Außenüberzug 4 ist hierbei insbesondere drehfest mit der Innenhülse 2 verbunden, insbesondere durch eine stoffschlüssige Verbindung, insbesondere Verkleben, Aufspritzen oder Aufgießen, und/oder durch eine kraftschlüssige Verbindung, insbesondere durch Rückstellungskräfte, welche durch das elastische Material des Außenüberzugs 4 bedingt sind.

Wie aus der Figur 1 ferner noch hervorgeht, weist der Außenüberzug 4 an einem dem zweiten Ende 2-2 der Innenhülse 2 zugewandten Bereich insbesondere eine Abflachung 5 auf, welche die Handauflagefläche für den Fahrradfahrer vergrößert. Diese Handauflagefläche an einem Fahrradgriff wird auch Wing oder Flügel genannt.

Somit stellt der Außenüberzug 4 eine weiche Grifffläche für die Hand des Fahrradfahrers bereit, welche eine ergonomische Bedienung des Fahrradgriffs 1 auch während längerer Fahrradfahrten ermöglicht.

Auch wenn durch das verformbare Material des Außenüberzugs 4 ein geringer Bewegungsfreiheitsgrad der Hand des Fahrradfahrers ermöglich wird, ist die aus einem nicht verformbaren, bzw. harten Material gebildete und mit der Lenkstange A fest verbundene Innenhülse 2 ohne strukturelle Veränderungen nicht verformbar.

Um jedoch auch eine begrenzte Verformbarkeit der Innenhülse 2 zu ermöglichen, weist die Innenhülse 2 des erfindungsgemäßen Fahrradgriffs 1 eine Mehrzahl von wellenförmigen Durchbrüchen 6 auf, welche sich jeweils von dem ersten Ende 2-1 der Innenhülse 2 zu dem zweiten Ende 2-2 der Innenhülse 2 erstrecken.

Wie in der Figur 1 dargestellt ist, sind die wellenförmigen Durchbrüche 6 an der Außenseite 2-5 der Innenhülse 2 nebeneinander und somit sind diese wellenförmigen Durchbrüche 6 entlang einer Umfangsrichtung 7 der Innenhülse 2 zumindest abschnittsweise, insbesondere vollständig, umlaufend angeordnet.

Die die Außenseite 2-5 der Innenhülse 2 umlaufenden wellenförmigen Durchbrüche 6 führen somit lokal eine strukturelle Schwächung in das Material der Innenhülse 2 dahingehend ein, dass das zweite Ende 2-2 der Innenhülse 2 gegenüber dem ersten Ende 2-1 der Innenhülse 2, zumindest minimal, verdrehbar ist, wobei eine entsprechende Verlagerungsrichtung 8 in der Figur 1 schematisch dargestellt ist.

Dies wird dadurch erreicht, dass das erste Ende 2-1 der Innenhülse 2 durch das bereits beschriebene Befestigungselement 3, insbesondere Klemmelement, an der Lenkstange A fest befestigt und damit nicht gegenüber der Lenkstange A verdrehbar ist, das zweite Ende 2-2 der Innenhülse 2 jedoch nicht mit der Lenkstange A fest verbunden ist.

Durch ein entsprechendes Verdrehen der Innenhülse 2 kann bei Extremfahrten, beispielsweise bei einer anstrengenden Steigungsfahrt, einer Bergauf- oder Bergabfahrt sowie bei einer anspruchsvollen Geländefahrt, insbesondere wenn sich der Fahrradfahrer vom Fahrradsattel erhebt, eine entsprechende rhythmische Körperbewegung des Fahrradfahrers, insbesondere der Hände, wirksam durch den Fahrradgriff 1 aufgenommen werden. Dies bewirkt eine signifikante Verbesserung der Ergonomie für den Fahrradfahrer, da auf den Fahrradgriff 1 wirkende Kraftspitzen, Drehmomente, Drehmomentspitzen und/oder Vibrationen durch ein entsprechendes Verdrehen der Innenhülse 2 wirksam aufgenommen werden.

Nach einem durch eine entsprechende Kraftspitze bewirkten Verdrehen der Innenhülse 2 wird eine Rückstellkraft in der Innenhülse 2 bereitgestellt, welche nach einem Nachlassen der Kraftspitze bewirkt, dass sich die Innenhülse 2 wieder in die Ausgangsposition entlang der Verlagerungsrichtung 8 zurückdreht, so dass der Ausgangszustand wieder erreicht wird.

Auch wenn die wellenförmigen Durchbrüche 6 der Innenhülse 2 eine vorteilhafte Verdrehbarkeit der Innenhülse 2 sicherstellen, weist die Innenhülse 2 eine ausreichende strukturelle Stabilität auf, so dass eine Beeinträchtigung der Befestigung der Innenhülse 2 an der Lenkstange A nicht auftritt.

Für weitere Details hinsichtlich der wellenförmigen Durchbrüche 6 der Innenhülse 2 wird auf die nachfolgenden Figuren verwiesen.

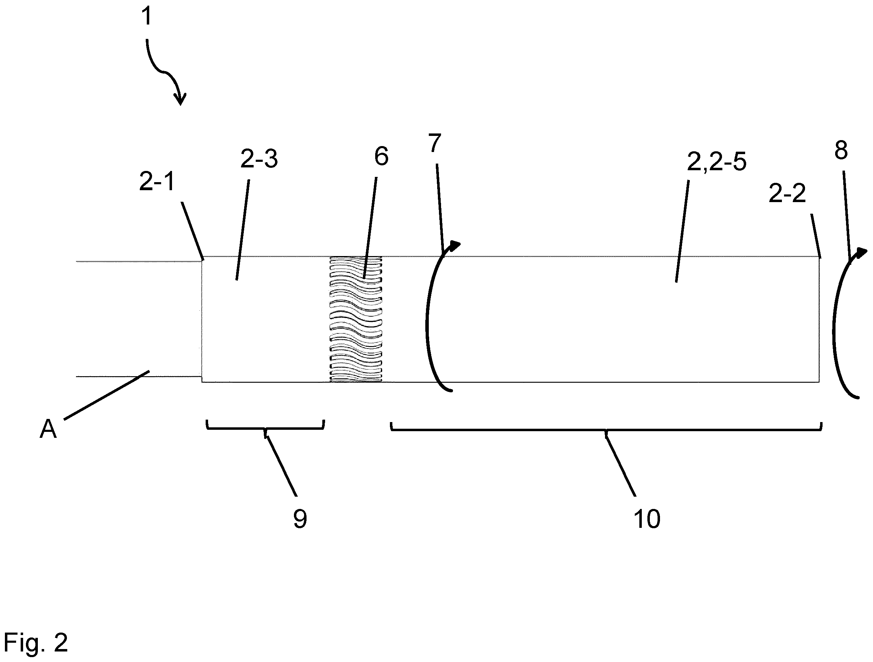

Figur 2 zeigt den in Figur 1 dargestellten Fahrradgriff ohne Außenüberzug und ohne Befestigungselement und zeigt damit nur die Innenhülse.

Somit ist in der Figur 2 lediglich die an der Lenkstange A des Fahrrads befestigte Innenhülse 2 des Fahrradgriffs 1 gezeigt.

Wie bereits in Bezug auf die Figur 1 im Detail beschrieben wurde, weist die Innenhülse 2 des erfindungsgemäßen Fahrradgriffs 1 eine Mehrzahl von wellenförmigen Durchbrüchen 6 auf, welche sich jeweils von dem ersten Ende 2-1 der Innenhülse 2 zu dem zweiten Ende 2-2 der Innenhülse 2 erstrecken. Die wellenförmigen Durchbrüche 6 sind an der Außenseite 2-5 der Innenhülse 2 nebeneinander und somit die Innenhülse 2 entlang einer Umfangsrichtung 7 der Innenhülse 2 zumindest abschnittsweise, insbesondere vollständig, umlaufend angeordnet.

Wie aus der Figur 2 hervorgeht, sind die wellenförmigen Durchbrüche 6 von dem ersten Ende 2-1 und von dem zweiten Ende 2-2 beabstandet in der Innenhülse 2 geformt.

Somit sind die wellenförmigen Durchbrüche 6 zwischen einem ersten Endabschnitt 9 der Innenhülse 2, welcher sich von dem ersten Ende 2-1 aus in Richtung des zweiten Endes 2-2 erstreckt, und einem zweiten Endabschnitt 10 der Innenhülse 2, welcher sich von dem zweiten Ende 2-2 aus in Richtung des ersten Endes 2-1 erstreckt, angeordnet.

Hierbei ist die Länge des zweiten Endabschnitts 10 insbesondere größer als die Länge des ersten Endabschnitts 9. Insbesondere beträgt die Länge des zweiten Endabschnitts 10 zumindest das doppelte, insbesondere das dreifache der Länge des ersten Endabschnitts 9.

Somit wird durch den ersten Endabschnitt 9 der Innenhülse 2, welcher auch den Befestigungsbereich 2-3 der Innenhülse 2 umfasst, eine wirksame Befestigung der Innenhülse 2 an der Lenkstange A sichergestellt. Die Länge des zweiten Endabschnitts 10 der Innenhülse 2 stellt einen ausreichend großen Angriffsbereich für eine wirksame Verdrehbarkeit der Innenhülse 2 sicher.

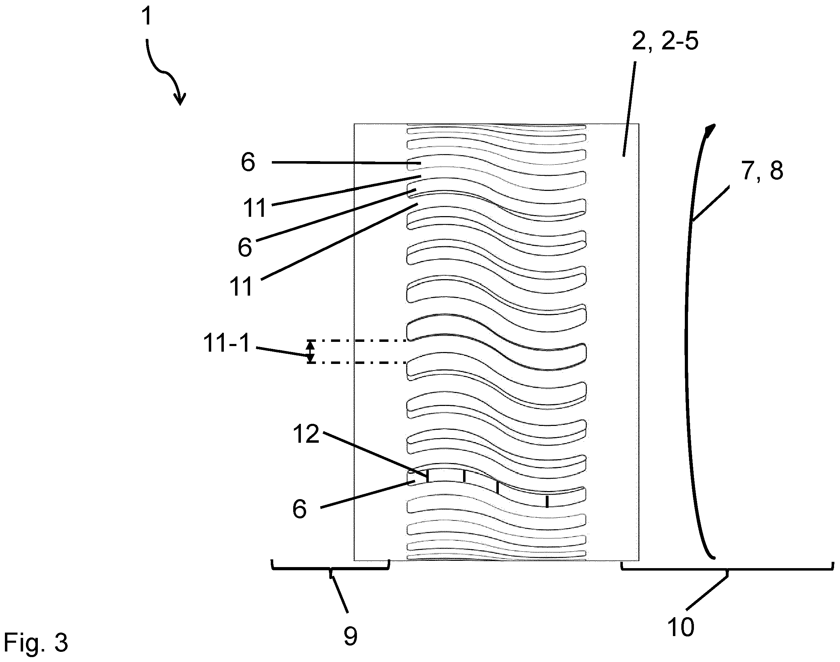

Figur 3 zeigt eine vergrößerte Darstellung der wellenförmigen Durchbrüche in der in Figur 1 und Figur 2 dargestellten Innenhülse.

Wie aus der Figur 3 zu entnehmen ist, erstrecken sich die wellenförmigen Durchbrüche 6 zwischen einem in Figur 3 lediglich schematisch dargestellten ersten Endabschnitt 9 und einem zweiten Endabschnitt 10.

Die wellenförmigen Durchbrüche 6 sind an der Außenseite 2-5 der Innenhülse 2 nebeneinander und somit die Innenhülse 2 entlang einer Umfangsrichtung 7 der Innenhülse 2 zumindest abschnittsweise, insbesondere vollständig, umlaufend angeordnet.

Wie aus der Figur 3 zu entnehmen ist, ist zwischen zwei benachbarten die Innenhülse 2 entlang der Umfangsrichtung 7 umlaufenden wellenförmigen Durchbrüchen 6 jeweils ein wellenförmiger Steg 11 angeordnet.

Entlang der Umfangsrichtung 7 wechseln sich somit auf der Außenseite 2-5 der Innenhülse 2 ein wellenförmiger Durchbruch 6 und ein wellenförmiger Steg 11 ab, und sind somit insbesondere alternierend entlang der Umfangsrichtung 7 angeordnet.

Insbesondere weist der jeweilige wellenförmige Steg 11 die gleiche Form und die gleich Länge wie die beiden benachbarten wellenförmigen Durchbrüche 6 auf.

Die Mehrzahl von wellenförmigen Durchbrüchen 6 und die Mehrzahl von wellenförmigen Stegen 11 weisen insbesondere eine Sinuswellenform auf.

Die Sinuswellenform ist insbesondere durch die Formel f(x) = a · sin (l · x) charakterisiert, wobei der Parameter a der Amplitude der Sinuswellenform entspricht, und wobei der Parameter l der Länge einer Periode der Sinuswellenform entspricht.

Die genannte Funktion f(x) legt die Sinuswellenform der wellenförmigen Durchbrüche 6 fest und dadurch auch die Stegbreite 11-1 der zwischen den wellenförmigen Durchbrüchen 6 angeordneten Stegen 11.

Durch die entsprechende Form der wellenförmigen Durchbrüche 6 und der zwischen den wellenförmigen Durchbrüchen 6 angeordneten Stegen 11 wird eine besonders vorteilhafte Verdrehbarkeit des zweiten Endabschnitts 10 der Innenhülse 2 gegenüber dem ersten Endabschnitt 9 erreicht.

Wie für lediglich einen einzigen Durchbruch 6 in der Figur 3 schematisch dargestellt ist, sind zumindest einige, insbesondere alle der wellenförmigen Durchbrüche 6 der Innenhülse 2 zumindest abschnittsweise, insbesondere vollständig, mit einem verformbaren Kunststoff 12 gefüllt.

Der verformbare Kunststoff 12 umfasst insbesondere Gummi und/oder einen E lastom er-Kunststoff.

Der verformbare Kunststoff 12 kann insbesondere während der Herstellung der Innenhülse 2 in die wellenförmigen Durchbrüche 6 eingebracht werden.

Alternativ kann der verformbare Kunststoff 12 des Außenüberzugs 4 in den wellenförmigen Durchbrüchen 6 der Innenhülse 2 zumindest abschnittsweise, insbesondere vollständig, aufgenommen sein.

Der in den wellenförmigen Durchbrüchen 6 der Innenhülse 2 aufgenommene verformbare Kunststoff 12 ist ausgebildet, bei einem Verdrehen der Innenhülse 2 eine der Verlagerungsrichtung 8 entgegengesetzt wirkende Rückstellkraft bereitzustellen, um nach dem Verdrehungsvorgang eine Rückführung der Innenhülse 2 in den Ausgangszustand zu erreichen.

Somit wird der innerhalb der wellenförmigen Durchbrüchen 6 angeordnete verformbare Kunststoff 12 bei einem Verdrehen der Innenhülse 2 komprimiert, wodurch aufgrund des elastischen Materials des verformbaren Kunststoffs 12 eine Rückstellkraft erzeugt wird, welche nach dem Verdrehungsvorgang eine Rückführung der Innenhülse 2 in den Ausgangszustand sicherstellt.

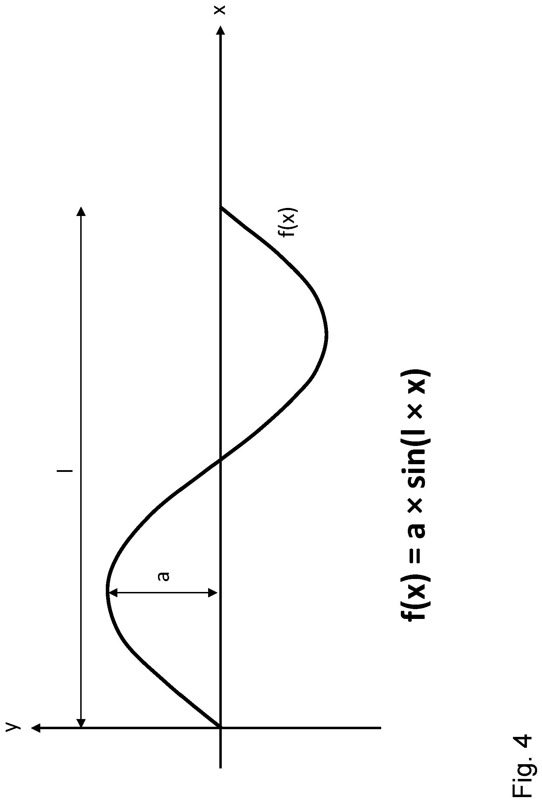

Figur 4 zeigt eine schematische Darstellung einer Sinuswellenfunktion der wellenförmigen Durchbrüche des in Figur 3 dargestellten Fahrradgriffs.

Wie bereits in Bezug auf die Figur 3 beschrieben worden ist und in der Figur 4 dargestellt ist, wird die Sinuswellenform insbesondere durch die Formel f(x) = a · sin (l · x) charakterisiert, wobei der Parameter a der Amplitude der Sinuswellenform entspricht, und wobei der Parameter l der Länge einer Periode der Sinuswellenform entspricht.

Durch eine Variation der Amplitude a wird die Größe einer Welle angepasst und unter Berücksichtigung der in Figur 3 dargestellten Stegbreite 11-1 auch die Anzahl der Sinuswellen in dem Bereich zwischen dem ersten und zweiten Endabschnitt 9 und 10. Die Periode l bestimmte die Länge einer Welle und somit auch die Länge des drehbaren Bereichs der Innenhülse 2.

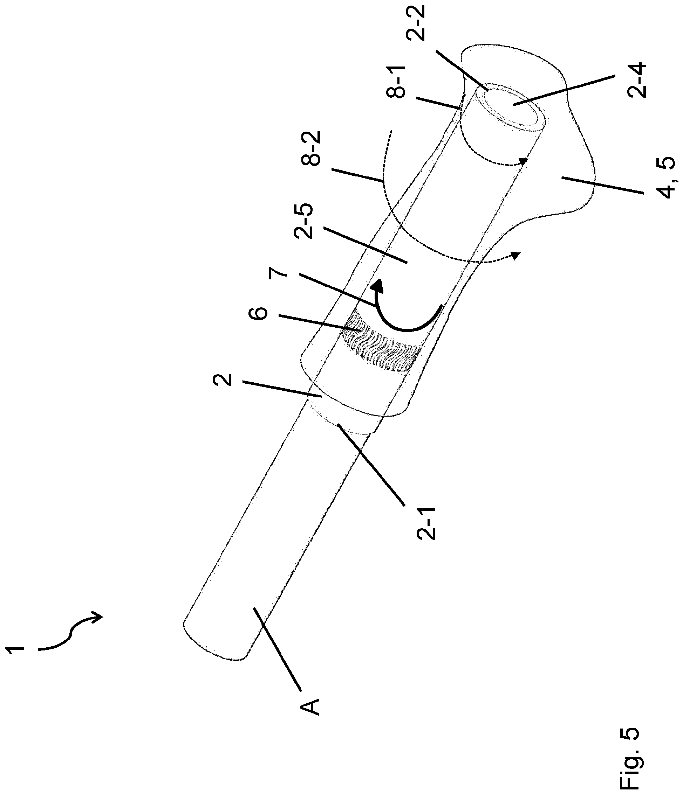

Figur 5 zeigt den an einer Lenkstange eines Fahrrads befestigten Fahrradgriff gemäß der in Figur 1 gezeigten Ausführungsform.

Der in Figur 5 gezeigte Fahrradgriff 1 ist identisch zu dem in Figur 1 gezeigten Fahrradgriff 1, bis darauf, dass in der Figur 5 das Befestigungselement 3 nicht gezeigt ist, und dass in der Figur 5 zwischen einer Verlagerungsrichtung 8-1 der Innenhülse 2 und einer Verlagerungsrichtung 8-2 des Außenüberzugs 4 differenziert wird.

Durch die drehfeste Verbindung zwischen dem Außenüberzug 4 und der Innenhülse 2 und durch die nicht drehfeste Verbindung zwischen dem zweiten Endbereich 10 und der Lenkstange A resultiert somit ein Verdrehen des Außenüberzugs 4 entlang der Verlagerungsrichtung 8-2 gleichzeitig in einem Verdrehen der Innenhülse 2 entlang der Verlagerungsrichtung 8-1.

### Bezugszeichen

- A: Lenkstange
- 1: Fahrradgriff
- 2: Innenhülse
- 2-1: Erstes Ende der Innenhülse
- 2-2: Zweites Ende der Innenhülse
- 2-3: Befestigungsbereich der Innenhülse
- 2-4: Innenhülsenöffnung
- 2-5: Außenseite der Innenhülse
- 3: Befestigungselement
- 4: Außenüberzug
- 5: Abflachung
- 6: Wellenförmige Durchbrüche
- 7: Umfangsrichtung
- 8: Verlagerungsrichtung
- 8-1: Verlagerungsrichtung der Innenhülse
- 8-2: Verlagerungsrichtung des Außenüberzugs
- 9: Erster Endabschnitt
- 10: Zweiter Endabschnitt
- 11: Steg
- 11-1: Stegbreite
- 12: Verformbarer Kunststoff

## Patentansprüche

1. Fahrradgriff (1), welcher an einer Lenkstange (A) eines Fahrrads befestigbar ist, umfassend:
eine Innenhülse (2), welche an der Lenkstange (A) befestigbar ist, wobei die Innenhülse (2) ein der Lenkstange (A) zugewandtes erstes Ende (2-1) und ein der Lenkstange (A) abgewandtes zweites Ende (2-2) aufweist;
ein Befestigungselement (3), welches ausgebildet ist, das erste Ende (2-1) der Innenhülse (2) an der Lenkstange (A) zu fixieren; und
einen Außenüberzug (4), welcher an einer Außenseite (2-5) der Innenhülse (2) angeordnet ist, und aus einem verformbaren Kunststoff (12) gebildet ist,
**dadurch gekennzeichnet, dass**
die Innenhülse (2) eine Mehrzahl von wellenförmigen Durchbrüchen (6) aufweist, welche sich jeweils von dem ersten Ende (2-1) der Innenhülse (2) zu dem zweiten Ende (2-2) der Innenhülse (2) erstrecken,
wobei die wellenförmigen Durchbrüche (6) an der Außenseite (2-5) der Innenhülse (2) nebeneinander und diese wellenförmigen Durchbrüche (6) somit entlang einer Umfangsrichtung (7) der Innenhülse (2) zumindest abschnittsweise umlaufend angeordnet sind.

2. Fahrradgriff (1) nach Anspruch 1, **dadurch gekennzeichnet, dass** die wellenförmigen Durchbrüche (6) der Innenhülse (2) zumindest abschnittsweise, insbesondere vollständig, mit einem verformbaren Kunststoff (12) gefüllt sind.

3. Fahrradgriff (1) nach Anspruch 1 oder 2, **dadurch gekennzeichnet, dass** der verformbare Kunststoff (12) des Außenüberzugs (4) in den Durchbrüchen (6) der Innenhülse (2) zumindest abschnittsweise, insbesondere vollständig, aufgenommen ist.

4. Fahrradgriff (1) nach Anspruch 2 oder 3, **dadurch gekennzeichnet, dass** das zweite Ende (2-2) der Innenhülse (2) gegenüber dem ersten Ende (2-1) der Innenhülse (2) entlang einer Verlagerungsrichtung (8) verdrehbar ist, wobei der in den Durchbrüchen (6) der Innenhülse (2) aufgenommene verformbare Kunststoff (12) ausgebildet ist, bei einem Verdrehen der Innenhülse (2) eine der Verlagerungsrichtung (8) entgegengesetzt wirkende Rückstellkraft bereitzustellen, um nach dem Verdrehungsvorgang eine Rückführung der Innenhülse (2) in den Ausgangszustand zu erreichen.

5. Fahrradgriff (1) nach einem der vorangehenden Ansprüche, **dadurch gekennzeichnet, dass** die wellenförmigen Durchbrüche (6) von dem ersten Ende (2-1) und/oder dem zweiten Ende (2-2) beabstandet in der Innenhülse (2) geformt sind.

6. Fahrradgriff (1) nach einem der vorangehenden Ansprüche, **dadurch gekennzeichnet, dass** die wellenförmigen Durchbrüche (6) zwischen einem ersten Endabschnitt (9) der Innenhülse (2), welcher sich von dem ersten Ende (2-1) aus in Richtung des zweiten Endes (2-2) erstreckt, und einem zweiten Endabschnitt (10) der Innenhülse (2), welcher sich von dem zweiten Ende (2-2) aus in Richtung des ersten Endes (2-1) erstreckt, angeordnet sind.

7. Fahrradgriff (1) nach einem der vorangehenden Ansprüche, **dadurch gekennzeichnet, dass** das zweite Ende (2-2) der Innenhülse (2), insbesondere der zweite Endabschnitt (10) der Innenhülse (2), gegenüber dem ersten Ende (2-1) der Innenhülse (2), insbesondere dem ersten Endabschnitt (9) der Innenhülse (2), verdrehbar ist.

8. Fahrradgriff (1) nach einem der vorangehenden Ansprüche, **dadurch gekennzeichnet, dass** zwischen zwei benachbarten die Innenhülse (2) entlang der Umfangsrichtung (7) umlaufenden wellenförmigen Durchbrüchen (6) jeweils ein wellenförmiger Steg (11) angeordnet ist.

9. Fahrradgriff (1) nach Anspruch 7, **dadurch gekennzeichnet, dass** der jeweilige wellenförmige Steg (11) die gleiche Form und/oder Länge wie die beiden benachbarten wellenförmigen Durchbrüche (6) aufweist.

10. Fahrradgriff (1) nach einem der vorangehenden Ansprüche, **dadurch gekennzeichnet, dass** die Mehrzahl von wellenförmigen Durchbrüchen (6) und insbesondere die Mehrzahl von wellenförmigen Stegen (11) eine Sinuswellenform aufweisen.

11. Fahrradgriff (1) nach Anspruch 10, **dadurch gekennzeichnet, dass** die Sinuswellenform durch die Formel f(x) = a · sin (l · x) charakterisiert ist, wobei der Parameter a der Amplitude der Sinuswellenform entspricht, und wobei der Parameter l der Länge einer Periode der Sinuswellenform entspricht.

12. Fahrradgriff (1) nach einem der vorangehenden Ansprüche, **dadurch gekennzeichnet, dass** die Innenhülse (2) als eine zylinderförmige Innenhülse (2) geformt ist.

13. Fahrradgriff (1) nach einem der vorangehenden Ansprüche, **dadurch gekennzeichnet, dass** die Innenhülse (2) einen Innendurchmesser aufweist, welcher von dem ersten Ende (2-1) der Innenhülse (2) zu dem zweiten Ende (2-2) der Innenhülse (2) abnimmt.

14. Fahrradgriff (1) nach einem der vorangehenden Ansprüche, **dadurch gekennzeichnet, dass** die Innenhülse (2) einen Innenhülsenhohlraum zur Aufnahme der Lenkstange (A) aufweist, wobei die Innenhülse (2) eine Innenhülseninnenwandung aufweist, welche den Innenhülsenhohlraum begrenzt, wobei an der Innenhülseninnenwandung im Bereich des zweiten Endes (2-2) der Innenhülse (2) zumindest eine Rippe angeordnet ist,
wobei sich insbesondere die an der Innenhülseninnenwandung angeordnete zumindest eine Rippe von dem ersten Ende (2-1) der Innenhülse (2) zu dem zweiten Ende (2-2) der Innenhülse (2) erstreckt.

15. Fahrradgriff (1) nach Anspruch 14, **dadurch gekennzeichnet, dass** an der Innenhülseninnenwandung eine Mehrzahl von Rippen, insbesondere drei Rippen, symmetrisch zu einer Mittelachse der Innenhülse (2) angeordnet ist.

16. Fahrradgriff (1) nach einem der vorangehenden Ansprüche, **dadurch gekennzeichnet, dass** der Außenüberzug (4) drehfest mit der Innenhülse (2) verbunden ist, insbesondere auf die Innenhülse (2) aufgegossen, aufgespritzt, oder aufgeklebt ist.

17. Fahrradgriff (1) nach einem der vorangehenden Ansprüche, **dadurch gekennzeichnet, dass** das Befestigungselement (3) ein Klemmelement ist, welches ausgebildet ist, die Innenhülse (2) auf die Lenkstange (A) zu klemmen, und wobei das Befestigungselement (3) insbesondere eine Schraub- oder Spanneinrichtung umfasst.

18. Fahrradgriff (1) nach einem der vorangehenden Ansprüche, **dadurch gekennzeichnet, dass** die Innenhülse (2) aus einem nicht verformbaren, insbesondere harten Material, geformt ist, welches insbesondere Metall oder Kunststoff, insbesondere faserverstärkten Kunststoff, oder insbesondere Leichtmetall, insbesondere eine Aluminium- oder Titanlegierung, umfasst sowie insbesondere im Klemmbereich einen Schlitz aufweist.

19. Fahrradgriff (1) nach einem der vorangehenden Ansprüche, **dadurch gekennzeichnet, dass** das verformbare Material des Außenüberzugs (4) und/oder das in den wellenförmigen Durchbrüchen (6) der Innenhülse (2) aufgenommene verformbare Material elastisches Material, insbesondere Gummi und/oder einen Elastomer-Kunststoff umfasst.

20. Fahrradgriff (1) nach einem der vorangehenden Ansprüche, **dadurch gekennzeichnet, dass** der Außenüberzug (4) an einem dem zweiten Ende (2-2) der Innenhülse (2) zugewandten Bereich eine Abflachung (5) aufweist.

21. Fahrradgriff (1) nach einem der vorangehenden Ansprüche, **dadurch gekennzeichnet, dass** der Fahrradgriff (1) als ein Spritzgussteil oder als ein 3D-Druckteil geformt ist.
